# EUROPÄISCHE PATENTSCHRIFT

(11) **EP 2 062 664 B1**
(45) Veröffentlichungstag und Bekanntmachung des Hinweises auf die Patenterteilung: **07.10.2015**
(21) Anmeldenummer: 08014880.2
(22) Anmeldetag: 22.08.2008
(51) Int. Cl.: C21D 1/18, B21D 28/02, B21D 28/10, B21D 35/00, C21D 1/02

(54) **Verfahren zur Herstellung eines gehaerteten Blechprofils**
Method for manufacturing a hardened sheet metal profile
Procédé de fabrication d'un profil en tôle durci

(30) Priorität: 23.10.2007 DE 102007050907
(43) Veröffentlichungstag der Anmeldung: 27.05.2009
(73) Patentinhaber: Benteler Automobiltechnik GmbH, 33102 Paderborn (DE)
(72) Erfinder: Gosmann, Stefan, 33102 Bad Wünnenberg (DE); Köster, Josef, 37671 Höxter (DE); Lütkemeier, Oliver, 33106 Paderborn (DE)
(74) Vertreter: Ksoll, Peter

(56) Entgegenhaltungen:
- EP-A- 1 253 208
- EP-A- 1 266 972
- WO-A-99/07492
- WO-A-2005/021821
- DE-A1- 3 709 181
- DE-A1- 3 925 733
- DE-A1- 19 640 568
- DE-A1-102004 019 693
- DE-A1-102006 040 224
- DE-A1-102007 002 678
- DE-B3-102004 038 626
- DE-B3-102005 051 403
- DE-C1- 10 149 220
- DE-C1- 10 149 221
- US-A1- 2004 255 446
- US-A1- 2006 137 779

## Beschreibung

Die Erfindung betrifft ein Verfahren zur Herstellung eines gehärteten Blechprofils aus einer Platine, wobei die Platine in einem Pressenwerkzeug warmumgeformt und anschließend zumindest partiell gehärtet wird.

Durch die DE 24 52 486 A1 zählt ein Verfahren zur Herstellung eines gehärteten Blechprofils aus einer Platine in einem Presshärtverfahren zum Stand der Technik. Hierbei wird eine aus einem härtbaren Stahl bestehende Platine auf Härtetemperatur erhitzt, dann in einem Pressenwerkzeug warm umgeformt und anschließend ausgehärtet, während das Blechprofil im Pressenwerkzeug verbleibt. Da das Blechprofil bei der im Zuge des Härtungsvorgangs vorgenommenen Kühlung im Pressenwerkzeug eingespannt ist, erhält man ein Produkt mit guter Maßhaltigkeit.

Im Rahmen der WO 99/07492 A1 ist vorgesehen, das vorbeschriebene Presshärtverfahren zu modifizieren und im Pressenwerkzeug die randseitigen Bereiche von vorgefertigten Löchern abzubiegen, so dass Kragen entstehen.

Das Abbiegen der Löcher geschieht im Pressenwerkzeug vor dem Härten. Die Öffnungen im Blechprofil sollen als Durchführungslöcher für Befestigungsmittel dienen. Weiterhin ist es möglich die Öffnungen als Referenzlöcher bzw. Aufnahmen für die positionsgenaue Ausrichtung des Blechprofils in Folgeprozessen zu nutzen.

Unvorteilhaft ist die Vorfertigung der Löcher in der Ausgangsplatine, weil die Maßgenauigkeit des hergestellten Blechprofils in die Abhängigkeit der Vorlochung gestellt ist..Beim Warmformen und anschließenden Presshärten verziehen sich die Löcher. Kreisrunde Löcher können beispielsweise leicht oval werden. Werden die vorgegebenen Toleranzen verlassen, ist das hergestellte Blechprofil unbrauchbar. Insbesondere bei Blechprofilen mit komplizierteren Geometrien muss mit größerem Ausschuss im Zuschnitt der Platinen kalkuliert werden.

Grundsätzlich hat das Warmumformen und Härten im Pressenwerkzeug aufgrund der durch die Kombination von Umform- und Vergütungsvorgang in einem Werkzeug rationellen Arbeitsweise Vorteile. Nachgeschaltete Schneideoperationen am gehärteten Blechprofil sind jedoch aufwendig, mit hohem Werkzeugverschleiß verbunden und kostenintensiv.

Die DE 197 23 655 B4 offenbart ein Verfahren zur Herstellung eines Stahlblechproduktes durch Heizen eines zugeschnittenen Blechs, Warmverformen des Stahlblechs in einem Werkzeugpaar und Härten des gebildeten Stahlblechprodukts durch schnelles Abkühlen von der austenitischen Temperatur, während es weiterhin in dem Werkzeugpaar ist, wobei in dem Stahlblechprodukt ungehärtete Bereiche verbleiben und eine nachträgliche Bearbeitung, beispielsweise ein Lochen, in solchen ungehärteten Bereichen ausgeführt werden und wobei die Bereiche getempert werden, nachdem das Stahlblechprodukt aus den Werkzeugen entnommen wurde.

Zum Stand der Technik zählt ferner durch die DE 101 20 919 A1 ein Verfahren zur Herstellung eines gehärteten Blechprofils aus einer Platine oder einem Halbzeug, die in einem Pressenwerkzeug zum Blechprofil warmumgeformt und gehärtete wird, wobei am Blechprofil aus der Ebene der Platine vorstehende Kragen vorgesehen werden. Beim Umformvorgang werden die Kragen aus ungelochten Bereichen der Platine ausgeformt.

Die DE 10 2005 051 403 B3 beschreibt ein Verfahren zum Warmformen von Werkstücken aus einer Stahlblechplatine. Vor oder während des Warmformens wird in Schnittzonen im Werkstück eine Verprägung eingebracht. Die Verprägung reduziert die Wanddicke in der Schnittzone, das Material wird dort folglich verdichtet. Nach dem Warmformen wird am gehärteten Bauteil innerhalb der Verprägung ein Beschnitt durchgeführt.

Aus der DE 101 49 221 C1 geht ein Verfahren zur Herstellung eines gehärteten Blechprofils hervor. Hierbei wird an einer gegebenenfalls vorgeformten Platine zunächst eine topfartige Ausformung ausgeformt, anschließend wird die Platine in einem Pressenwerkzeug zum Blechprofil warm umgeformt und gehärtet. Auf diese Weise erfolgt im Pressenwerkzeug eine endformgebende Kalibrierung. Beim Kalibrieren kann der Boden der Ausformung abgetrennt bzw. ausgerissen werden.

Die nicht vorveröffentlichte DE 10 2007 002 678 A1 betrifft ein Verfahren zum Herstellen eines warm umgeformten Blechbauteils, bei dem ein Blech zunächst erwärmt und daraufhin in einem Umformwerkzeug umgeformt und abgekühlt wird, wobei das Blech in dem Umformwerkzeug beschnitten wird.

Aus der US 2006/0137779 A1 geht ein Verfahren zur Herstellung eines metallischen Formbauteils hervor. Ein Halbzeug aus einem ungehärteten warmformbaren Stahlblech wird zunächst durch ein Kaltumformverfahren zu einem Bauteil-Rohrling umgeformt. Anschließend wird der Bauteil-Rohrling randseitig auf eine dem herzustellenden Bauteil näherungsweise entsprechende Berandungskontur beschnitten. Schließlich wird der beschnittene Bauteil-Rohrling erwärmt und in einem Warmumform-Werkzeug pressgehärtet.

Das aus der DE 10 2004 038 626 B2 bekannte Verfahren zum Herstellen von gehärteten Bauteilen aus Stahlblech zielt darauf ab, die Einarbeitungszeit der Werkzeuge zu verkürzen, den Werkzeugverschleiß zu senken und Bauteile mit hoher Maß- und Passgenauigkeit und ohne Verzug zu liefern. Hierzu soll das Bauteil vom Formhärtwerkzeug im Bereich von positiven Radien gestützt und teilbereichsweise zumindest im Bereich von Beschnittkanten verzugsfrei klemmend festgehalten werden, wobei in den Bereichen, in denen das Bauteil nicht geklemmt wird, das Bauteil zumindest zu einer Formwerkzeughälfte mit einem Spalt beabstandet ist. Die Form wird so eingestellt und bearbeitet, dass das Bauteil außerhalb der geklemmten Bereiche frei schrumpfen kann, wodurch sich das Bauteil zumindest im Bereich der positiven Radien eng an die Form anlegt.

Durch die EP 1 253 208 A1 zählt ferner ein Verfahren zur Herstellung eines gehärteten Blechprofils zum Stand der Technik, bei dem eine Platine in einem Pressenwerkzeug zum Blechprofil warm umgeformt und gehärtet wird. Am Blechprofil werden aus der Ebene der Platine vorstehende Referenzpunkte bzw. Kragen erzeugt, die zur Lageorientierung des Blechprofils in nachfolgenden Fertigungsoperationen dienen. Die Kragen werden beim Umformvorgang aus ungelochten Bereichen der Platine ausgeformt.

Die DE 37 09 181 A1 erläutert ein Verfahren zur Herstellung von komplizierten Blechteilen in einem mehrere Bearbeitungsschritte umfassenden Arbeitsgang. Es wird eine Druckumformung durchgeführt, bei der die Formplatine zwischenbeschnitten wird. Der Druck wird dann bis zur Endphase erhöht, das Werkstück endgeprägt, endbeschnitten, gelocht, durchgestellt und abgekantet. Nach Druckabbau wird das Blechteil entformt.

Der Erfindung liegt ausgehend vom Stand der Technik die Aufgabe zu Grunde, ein Verfahren zur Herstellung von gehärteten Blechprofilen aus einer Platine wirtschaftlicher zu gestalten und insbesondere positionsgenauere Schnittoperationen am Blechprofil zu ermöglichen.

Die Lösung dieser Aufgabe besteht nach der Erfindung in einem Verfahren gemäß den Merkmalen von Anspruch 1.

Erfindungsgemäß wird an der Platine ein durch zumindest eine Schnittkante begrenzter Bereich angeschnitten. Hierbei wird das Material der Platine in dem angeschnittenen Bereich aus der Ebene der Platine in eine Richtung verschoben, wobei die Schnitttiefe geringer ist, als die halbe Materialstärke der Platine. Anschließend wird die Platine warmumgeformt. Nach dem Warmformen wird der angeschnittene Bereich an der Schnittkante ausgedrückt.

Auf diese Weise lassen sich an bzw. in der Platine Löcher und Durchbrüche mit hoher Maßgenauigkeit erzeugen. Auch eine einfache Bauteiltrennung ist möglich, insbesondere bei einer Doppelteilfertigung. Hierbei werden im Pressenwerkzeug parallel zwei Blechprofilbauteile aus einer Platine erzeugt. Nach dem Warmformen werden die Blechprofile getrennt. Hierzu wird der angeschnittene Bereich entlang der Schnittkanten ausgedrückt.

Die Maß- bzw. Positionsgenauigkeit der durchgeführten Schnittoperationen kann deutlich gesteigert werden. Auch kann der Verschleiß an den Schneidwerkzeugen verringert werden, weil bei den nach dem Warmformen durchgeführten Ausdrücken nicht mehr die komplette Wandstärke durchgetrennt werden muss.

Wie bereits erwähnt, wird das Material der Platine in dem angeschnittenen Bereich beim Anschneiden aus der Ebene der Platine in eine Richtung verschoben. Der angeschnittene Bereich wird demzufolge auf der der Schnittkante gegenüberliegenden Seite der Platine aus der Ebene bzw. der Fläche der Platine herausgeschoben.

Das Anschneiden und Ausdrücken des Bereichs wird in entgegengesetzter Richtung durchgeführt werden. Hierbei wird die Platine beim Anschneiden von einer Seite angeschnitten und das Material im angeschnittenen Bereich auf die andere Seite der Platine verlagert. Beim Ausdrücken wird der Bereich von der anderen Seite der Platine her durch- bzw. ausgedrückt. Hierbei wird zunächst ein Kanteneinzug erzeugt, so dass man auf beiden Seiten der Platine gradfreie Schnittflächen erhält.

Vorteilhafte Ausgestaltungen und Weiterbildungen des grundsätzlichen Erfindungsgedankens sind Gegenstand der abhängigen Ansprüche 2 bis 4.

Das Anschneiden des Bereichs erfolgt vor dem Warmformen, insbesondere kann das Anschneiden dann beim Platinenschnitt durchgeführt werden.

Insbesondere liegt die Schnitttiefe im Bereich von einem Drittel der Materialstärke der Platine. Die Schnitttiefe wird so eingestellt, dass das Schneidwerkzeug nach dem Anschneiden problemlos aus dem Material herausgezogen werden kann.

Das Ausdrücken des angeschnittenen Bereichs kann im Pressenwerkzeug in einer Folgestufe erfolgen. Diese Vorgehensweise ist besonders rationell und effizient. Grundsätzlich kann das Ausdrücken aber auch außerhalb des Pressenwerkzeugs in einem nachgeschalteten Bearbeitungswerkzeug vorgenommen werden.

Im Rahmen der Erfindung wird eine Warmumformung der Stahlblechplatine bei einer Temperatur zwischen 850 °C und 950 °C als zweckdienlich erachtet, wobei ein bevorzugter Temperaturbereich zwischen 910 °C und 940 °C liegt. Vorzugsweise kommt eine Platine aus einer Stahllegierung mit einem Kohlenstoffanteil zwischen 0,15 Gew.-% und 0,3 Gew.-% für die Fertigung des Blechprofils zur Anwendung. Dieser Werkstoff lässt sich wirtschaftlich warm umformen und vollständig oder partiell vergüten. Darüber hinaus weist er die notwendigen Werkstoffeigenschaften hinsichtlich des geforderten Festigkeits- und des Deformationsverhaltens auf.

Das erfindungsgemäße Verfahren ist besonders geeignet für die Herstellung von gehärteten Blechprofilen für Fahrwerks- oder Strukturbauteile von Kraftfahrzeugen.

Die Erfindung ist nachfolgend anhand von in den Zeichnungen dargestellten Ausführungsbeispielen näher beschrieben. Es zeigen:
- Figur 1: im Schema technisch vereinfacht einen Ausschnitt aus einem ersten Fertigungsablauf zur Herstellung eines gehärteten Blechprofils und
- Figur 2: ebenfalls schematisch einen Ausschnitt aus einem zweiten Fertigungsablauf zur Herstellung eines gehärteten Blechprofils.

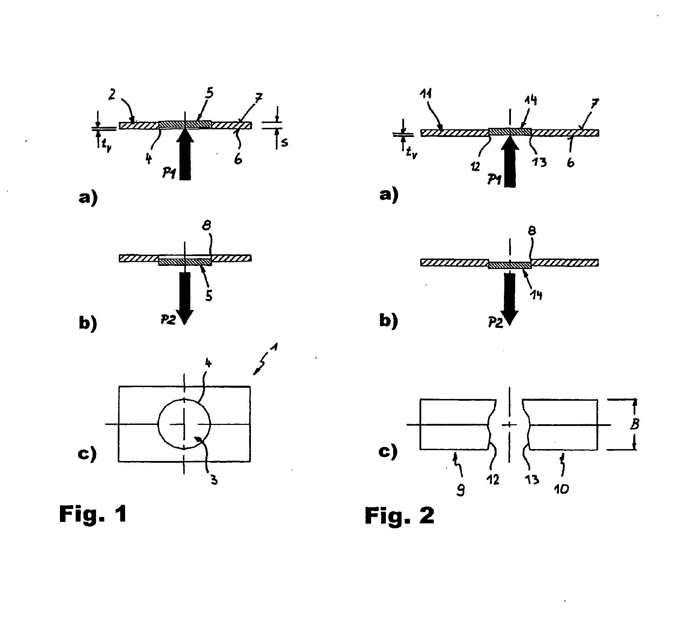

Anhand der Figur 1a) - c) ist die Herstellung eines gehärteten Blechprofils 1 (Figur 1c)) aus einer Platine 2 (Figuren 1a) und 1b)) erläutert, wobei die Platine 2 in einem Pressenwerkzeug warm umgeformt und anschließend partiell oder vollständig gehärtet wird. Im Blechprofil 1 wird im Warmformwerkzeug ein Loch bzw. Durchbruch 3 mit geringer Toleranz erzeugt.

Das Warmumformen und Presshärten im Pressenwerkzeug ist bekannt. Vorzugsweise kommt eine Platine 2 aus einem Stahlwerkstoff mit einem Kohlenstoffgehalt zwischen 0,15 Gew.-% und 0,3 Gew.-% zum Einsatz. Die Platine 2 wird auf Härtungstemperatur, d.h. auf eine über Ac₃ liegende Temperatur erhitzt, insbesondere auf eine Temperatur von 850 °C bis 950 °C, vorzugsweise auf eine Temperatur zwischen 910 °C und 940°C. Die Platine 2 wird anschließend im Pressenwerkzeug zum Blechprofil 1 umgeformt. Noch im Pressenwerkzeug eingespannt, wird das Blechprofil 1 dann durch schnelle Abkühlung gehärtet.

Zur Erzeugung des Durchbruchs 3 wird an der Platine 2 vor dem Warmformen ein durch eine Schnittkante 4 begrenzter Bereich 5 angeschnitten (Figur 1a)). Die Schnittkante 4 ist in sich geschlossen. Die Schnitttiefe tᵥ ist geringer als die Materialstärke s der Platine 2. Insbesondere liegt die Schnitttiefe tv bei ca. einem Drittel der Materialstärke s. Anschließend wird die Platine 2 warm umgeformt und der angeschnittene Bereich 5 nach dem Warmformen an der Schnittkante 4 als Butzen ausgedrückt (Figur 1b)).

Beim Anschneiden wird die Platine 2 von einer Flachseite 6 her angeschnitten und das Material in dem Bereich 5 aus der Ebene der Platine 2 heraus in Richtung auf die andere Flachseite 7 verschoben (Pfeil P1). Das anschließende Ausdrücken nach dem Warmformen erfolgt durch eine gegenläufige Schneidoperation. Hierbei wird auf der anderen Flachseite 7 der Platine 2 ein Kanteneinzug 8 erzeugt und der Bereich 5 entlang der Schnittkante 4 durchgeschnitten und ausgedrückt (Pfeil P2). Anschneiden und Ausdrücken des Bereichs 5 werden folglich in entgegengesetzter Richtung durchgeführt. Besonders effizient erfolgt das Ausdrücken des Bereichs 5 im Pressenwerkzeug in einer nachgeschalteten Bearbeitungsstufe. Durch die vordefinierte Schnittkante 4 können beim Ausdrücken im Warmformwerkzeug gradfreie Schnittkonturen erzielt werden.

Bei der Vorgehensweise wie anhand der Figuren 2a) - c) erläutert, wird ein gradfreies Trennen von Blechprofilen 9, 10 im Zuge der Fertigung im Warmformwerkzeug vorgenommen.

Ausgangspunkt bildet eine Platine 11, welche vor dem Warmformen angeschnitten wird, so dass Schnittkanten 12, 13 entstehen. Die Schnittkanten 12, 13 verlaufen über die gesamte Breite B der Platine 11. Durch die Schnittkanten 12, 13 wird ein Bereich 14 begrenzt. Die Schnitttiefe tᵥ liegt, wie zuvor beschrieben, bei ca. einem Drittel der Materialstärke s der Platine 11.

Die Platine 11 wird dann in einem Pressenwerkzeug warm umgeformt und gehärtet. Hierbei erhalten die Blechprofile 9, 10 ihre Kontur. Nach dem Warmformen und Härten sind die Blechprofile 9, 10 immer noch über den Bereich 14 verbunden. Zum Trennen der Blechprofile 9, 10 wird der Bereich 14 entlang der Schnittkanten 12, 13 ausgedrückt und die Blechprofile 9, 10 von einander getrennt. Auf diese Weise ist ein gradfreies Trennen der Blechprofile 9, 10 möglich.

Das Anschneiden und Ausdrücken des Bereichs 14 wird, wie zuvor anhand der Figur 1 erläutert, durchgeführt, so dass auch in Figur 2 gleiche Bezugszeichen verwendet worden sind.

Grundsätzlich ist auch die Herstellung von andersartigen Schnittkonturen mit einem Anschneiden vor dem Warmformen und einem Durchschneiden und Ausdrücken nach dem Warmformen möglich.

Da die Blechprofile 9, 10 bis zum Ausdrücken des Bereichs 14 miteinander verbunden sind, könnten die Blechprofile 9, 10 als Kette zu nachgeschalteten Bearbeitungsoperationen transportiert werden und erst später außerhalb des Warmformwerkzeugs getrennt werden.

### Bezugszeichen:

1 - Blechprofil
2 - Platine
3 - Durchbruch
4 - Schnittkante
5 - Bereich
6 - Flachseite v. 2
7 - Flachseite v. 2
8 - Kanteneinzug
9 - Blechprofil
10 - Blechprofil
11 - Platine
12 - Schnittkante
13 - Schnittkante
14 - Bereich
tᵥ - Schnitttiefe
s - Materialstärke
B - Breite v. 9
P1 - Pfeil
P2 - Pfeil

## Patentansprüche

1. Verfahren zur Herstellung eines gehärteten Blechprofils (1; 9, 10) aus einer Platine (2; 11), wobei an der Platine (2; 11) ein durch zumindest eine Schnittkante (4; 12, 13) begrenzter Bereich (5; 14) angeschnitten wird, wobei die Schnitttiefe (tᵥ) geringer als die halbe Materialstärke (s) der Platine (2; 11) ist und das Material der Platine (2; 11) in dem angeschnittenen Bereich (5; 14) beim Anschneiden aus der Ebene der Platine (2; 11) in eine Richtung verschoben wird und die Platine (2; 11) anschließend in einem Pressenwerkzeug warm umgeformt und zumindest partiell gehärtet wird und der angeschnittene Bereich (5; 14) nach dem Warmformen an der Schnittkante (4; 12, 13) ausgedrückt wird, wobei das Anschneiden und Ausdrücken des Bereichs (5; 14) in entgegengesetzte Richtung durchgeführt wird.

2. Verfahren nach einem der Ansprüche 1,**dadurch gekennzeichnet, dass** die Schnitttiefe (tᵥ) ein Drittel der Materialstärke (s) beträgt.

3. Verfahren nach Anspruch 1 oder 2, **dadurch gekennzeichnet, dass** das Ausdrücken des Bereichs (5; 14) im Pressenwerkzeug erfolgt.

4. Verfahren nach wenigstens einem der Ansprüche 1 bis 3, **dadurch gekennzeichnet, dass** die Platine (2; 11) vor dem Umformvorgang auf eine Temperatur von 850 °C bis 950 °C, vorzugsweise 910 °C bis 940 °C, erwärmt wird.

## Claims

1. Method for manufacturing a hardened sheet metal profile (1; 9, 10) from a blank (2; 11), wherein a section (5; 14) delimited by at least one cutting edge (4; 12, 13) is cut out of the blank (2; 11), the cutting depth (tᵥ) being less than half the thickness of the material (s) of the blank (2; 11) and when being cut the material of the blank (2; 11) in the cut out area (5; 14) is pushed out of the plane of the blank (2; 11) in one direction and the blank (2; 11) is then hot formed in a press tool and is hardened at least partially and the cut out section (5; 14) is pushed out at the cutting edge (4; 12, 13) after hot forming, the cutting and pushing out of the section (5; 14) being performed in opposite directions.

2. Method according to claim 1, **characterised in that** the cutting depth (tᵥ) is a third of the material thickness (s) .

3. Method according to claim 1 or 2, **characterised in that** the section (5; 14) is pushed out in the press tool.

4. Method according to at least one of claims 1 to 3, **characterised in that** the blank (2; 11) is heated prior to the forming process to a temperature of 850 °C to 950 °C, preferably 910 °C to 940 °C.

## Revendications

1. Procédé de fabrication d'un profilé en tôle durci (1 ; 9, 10) à partir d'un flan (2 ; 11), une zone (5 ; 14) délimitée par au moins une arête de coupe (4 ; 12, 13) étant entaillée dans le flan (2 ; 11), la profondeur de passe (tᵥ) étant inférieure à la moitié de l'épaisseur de matériau (s) du flan (2 ; 11) et le matériau du flan (2 ; 11) dans la zone entaillée (5 ; 14) étant déplacé lors de l'entaillage dans une direction hors du plan du flan (2 ; 11) puis le flan (2 ; 11) étant déformé à chaud dans un outil de presse et au moins partiellement durci et la zone entaillée (5 ; 14) étant éjectée après le formage à chaud au niveau de l'arête de coupe (4 ; 12, 13), l'entaillage et l'éjection de la zone (5 ; 14) étant effectués dans des sens opposés.

2. Procédé selon la revendication 1, **caractérisé en ce que** la profondeur de passe (tᵥ) est égale à un tiers de l'épaisseur de matériau (s).

3. Procédé selon la revendication 1 ou 2, **caractérisé en ce que** l'éjection de la zone (5 ; 14) s'effectue dans l'outil de presse.

4. Procédé selon au moins l'une des revendications 1 à 3, **caractérisé en ce que** le flan (2 ; 11) est chauffé avant le processus de déformation à une température comprise entre 850 °C et 950 °C, de préférence entre 910 °C et 940 °C.
